# EUROPÄISCHE PATENTANMELDUNG

(11) **EP 2 149 781 A2**
(43) Veröffentlichungstag der Anmeldung: **03.02.2010**
(21) Anmeldenummer: 09164625.7
(22) Anmeldetag: 06.07.2009
(51) Int. Cl.: G01C 15/02, G01C 15/00

(54) **Messmittel**

(30) Priorität: 01.08.2008 DE 102008040939
(71) Anmelder: HILTI Aktiengesellschaft, 9494 Schaan (LI)
(72) Erfinder: Waibel, Reinhard, 9442 Berneck (CH); Winter, Andreas, 6800 Feldkirch (AT)

(57) **Zusammenfassung**

Messmittel (10) zur Bestimmung und/oder Übertragung eindimensionaler Abmessungen, wobei sich die Abmessungen relativ auf mindestens eine Stirnseite (16) des Messmittels (10) beziehen und an der mindestens einen Stirnseite (16) mindestens eine Halterung (13,14,17) für eine temporäre Fixierung eines Markierungsmittels, z.B. in Form eines Nagels oder Bolzens, angebracht ist. Das Messmittel (10) kann eine Messlatte und/oder einen Laserempfänger umfassen.

## Beschreibung

Die vorliegende Erfindung betrifft ein Messmittel zur Bestimmung und/oder Übertragung eindimensionaler Abmessungen gemäß Patentanspruch 1.

Während eines Bauprozesses werden im Bereich des Nivellierens und Ausrichtens verschiedenste Aufgaben ausgeführt. Insbesondere beim Messen oder Positionieren einer neuen Position in Bezug auf eine Referenzhöhe oder Referenzmarke müssen mehrfach verschiedenste Strecken und Maße ermittelt und übertragen werden.

So kann beispielsweise mit einer Lasergerät, insbesondere Linien- oder Rotationslasergerät, eine Referenzebene erzeugt und dargestellt werden, auf die sich letztendlich nachfolgende Messungen beziehen. Insbesondere bei der Höhenübertragung und der Darstellung einer als sogenannten Meterriss bezeichneten Markierung werden vielfach eindimensionale Abmessungen in Bezug auf die oben angesprochene Referenzebene übertragen.

Der Vorgang der Höhenübertragung wird derzeit mit einer Messlatte oder einem Laserempfänger durchgeführt. Dabei wird die Abmessung der bekannten Höhe (z.B. Meterriss) in Bezug auf eine Referenzebene ermittelt und auf eine neue Stelle, beispielsweise eine neue Wand oder einen neuen Raum, übertragen. Dabei wird die Messlatte oder der Laserempfänger derart platziert, dass die Stirnseite der Messlatte oder des Laserempfängers die zu markierende und davor bestimmte Höhe darstellt und auf das Objekt übertragen. Diese Markierung und damit die Übertragung der Höhendifferenz erfolgt mittels eines Markierungsmittels, beispielsweise eines Markierungsnagels, der auf der Höhe der Stirnseite in die Wand eingeschlagen wird.

Nachteilig wirkt sich dabei aus, dass mit der Messlatte und/oder dem Laserempfänger hantiert werden muss, während auf der eine Seite die Position erfasst und ohne Veränderung gehalten und auf der anderen Seite der Markierungsnagel eingeschlagen werden soll. Hierunter leidet oft die Genauigkeit bzw. ist eine weitere Person erforderlich.

Der vorliegenden Erfindung liegt somit die Aufgabe zugrunde, ein Messmittel zur Verfügung zu stellen, mit dem das Markieren oder die Übertragung von Abmessungen bzw. Strecken unter Beibehaltung größtmöglicher Genauigkeit erleichtert wird.

Diese Aufgabe wird erfindungsgemäß durch die Merkmale des Anspruchs 1 gelöst. Vorteilhafte Weiterbildungen ergeben sich aus den abhängigen Ansprüchen.

Beim hier beschriebenen Messmittel wird das Markierungsmittel in das Messmittel "integriert". Hierzu weist das erfindungsgemäße Messmittel an mindestens einer Stirnseite mindestens eine Halterung für eine temporäre Fixierung des Markierungsmittels auf. Hiermit wird das Markierungsmittel an der jeweils richtigen Stelle gehalten, ohne dass es einer weiteren Unterstützung bedarf.

Der Vorteil des erfindungsgemäßen Messmittels liegt somit darin, dass der Prozess der Erfassung der Lage zur Referenz und der Markierung in einen Schritt zusammengelegt wird. Dies ermöglicht die Durchführung des Prozesses mit nur einer Person, ohne dass die Genauigkeit der Messung darunter leidet.

Das Messmittel kann dabei eine Messlatte umfassen, auf deren Längsausdehnung die Skala zur Messung des Abstandes bzw. der Abmessung - bezogen auf eine Stirnseite der Messlatte - angebracht ist und somit eine Relativmessung auf diese erleichtert. Ebenso ist es möglich, dass das Messmittel ein Laserempfänger ist, der die Detektion einer durch einen Laserstrahl dargestellten Referenzebene oder Referenzlinie ermöglicht. In heller Umgebung lässt sich ein von einem Baulaser, insbesondere Rotationslaser, ausgesandter Laserstrahl nur schwer am Objekt ausmachen. Ein hier eingesetzter Laserempfänger detektiert auf einem speziellen Detektionsbereich den für das menschliche Auge schlecht sichtbaren Laserstrahl und informiert der Benutzer über die Lage des Laserstrahls in Bezug auf die Lage des Laserempfängers. Dies kann auf optischem oder akustischem Wege realisiert sein.

Vorteilhafterweise umfasst das Messmittel jedoch eine Messlatte, auf der ein Laserempfänger verschiebbar angebracht ist. Hierdurch werden die Vorteile beider Geräte kombiniert. Der Laserempfänger kann auf den entsprechenden Wert auf der Skala der Messlatte eingestellt werden und informiert den Benutzer, sobald der Laserstrahl den Detektionsbereich und somit den eingestellten Wert überstreicht. Mittels der Messlatte lassen sich zudem größere Abmessungen bzw. Strecken übertragen.

Bevorzugt ist das Markierungsmittel zumindest teilweise magnetisierbar ausgestaltet. Hierdurch ist es möglich, die temporäre Fixierung des Markierungsmittels aufgrund elektromagnetischer Wechselwirkungen zu bewerkstelligen. Insbesondere bevorzugt ist das Markierungsmittel dabei ein Nagel oder Bolzen, der mittels einer Hammers an der entsprechenden Stelle in das Objekt bzw. die Wand eingeschlagen werden kann oder der aufgrund seiner Spitze eine leicht aufzufindende Markierung hinterlässt. Der Benutzer muss zudem nicht an ein neues Markierungsmittel gewöhnt werden.

Die Fixierung eines zumindest teilweise magnetisierbaren Markierungsmittels ist bevorzugt dadurch realisiert, dass in das Messmittel im Bereich der Stirnseite ein oder mehrere Magnet(e) derart eingelagert ist/sind, dass die magnetische Wechselwirkung mit dem Markierungsmittel ausreicht, selbiges temporär zu halten, aber auch eine Entkoppelung des Markierungsmittel vom Messmittel ohne großen Kraftaufwand bewerkstelligen zu können. Hierbei handelt es sich Vorteilhafterweise um handelsübliche Permanentmagnete. Selbstverständlich können auch mehrere Magnete eingebracht sein. Hierdurch steigt die Kraft, mit der das Markierungsmittel fixiert wird. Möglich ist auch die etwas komplexere aber dafür schaltbare Verwendung von Elektromagneten.

Die Möglichkeit, den Bereich der Stirnseite metallisch bzw. magnetisierbar auszugestalten, um magnetische Markierungsmittel zu verwenden soll ebenfalls unter die vorliegende Erfindung fallen. Dies setzt allerdings die Einführung neuartiger Markierungsmittel voraus.

In einer weiteren Ausgestaltungsform wird das Markierungsmittel mechanisch fixiert. Dies kann mittels Kraftschluss, Reibschluss oder Formschluss bzw. durch eine Mischform der vorangegangenen Formen bewerkstelligt werden. Durch eine mechanische Fixierung können verschiedenste Formen von Markierungsmitteln zum Einsatz kommen. Möglich sind insbesondere Stifte und Markierungskreiden, unabhängig von deren Form.

In einer weiteren Ausgestaltung umfasst die Halterung einen Vorratsbehälter für Markierungsmittel dergestalt, dass die Markierungsmittel beim Setzen aus dem Vorratsbehälter entfernt werden und ein nachrückendes Markierungsmittel an die Stelle des voran gesetzten rückt. Hierdurch ist ein schnelles und rationelles Arbeiten beim Setzen mehrer Marken möglich, insbesondere dann, wenn das Markierungsmittel automatisch die Markierung setzt - beispielsweise indem ein Nagel/Bolzen automatisch gesetzt oder ein Stift einen Punkt hinterlässt. Der Vorratsbehälter ist Vorteilhafterweise derart in die Halterung integriert, dass die Spitze des "wirksamen" Markierungsmittels in die Ebene der Stirnfläche fällt. Hierdurch wird der Fehler, der durch die räumliche Ausdehnung des Markierungsmittels und des Vorratsbehälters entsteht kompensiert.

Die mechanische Fixierung kann über verschiedenste Formgebungen der Messmittels an der Stirnseite realisiert sein, bevorzugt sind jedoch Laschen entlang der Stirnseite angebracht, um das Markierungsmittel zu fixieren. Hierdurch wird ein Verrutschen des Markierungsmittels auf der Stirnseite unterbunden, ebenso wie ein unbeabsichtigtes Herabfallen. Die Laschen üben somit eine Kraft mit einer Komponente in der Ebene als auch senkrecht zu Ebene auf das Markierungsmittel aus.

Um einen Einsatz des Messmittels auch ohne Markierungsmittel störungsfrei bewerkstelligen zu können, sind die Laschen (17a) derart angebracht, dass sie bei Abwesenheit eines Markierungsmittels in die Stirnseite (16) schwenkbar, klappbar oder allgemein bewegbar ausgestaltet sind. Dies ist insbesondere durch stoffschlüssiges Anbringen der Laschen an der Stirnseite in Form von Festkörpergelenken realisierbar. Möglich ist auch der Einsatz von Scharnieren oder dergleichen. Sobald das Messmittel auf der Stirnseite aufgestellt wird - was beispielsweise der Fall ist, wenn mit dem Messmittel direkt ein Abstand von einem Objekt (Wand, Boden) zu ermitteln ist - ist ein Einklappen der Laschen in hierfür passend vorgesehene Aussparungen, Nuten, Kerben und dergleichen in der Oberfläche möglich. Hierdurch kann das Messmittel ohne Weiteres auch für Standardeinsätze herangezogen werden.

Bei der Messung ist der zu übertragende Wert auf die Stirnseite des Messmittels bezogen, so dass eigentlich exakt eine Linie oder ein Punkt auf einer Verlängerung der Stirnseite auf das Objekt übertragen werden müsste. Markierungsmittel (Nägel, Bolzen, Stifte oder Kreiden) weisen eine räumliche Ausdehnung auf, so dass die Mitte des Markierungsmittels - auf diese beziehen sich dann die anschließenden Messungen von dem markierten Punkt aus - nicht in der Ebene der Stirnseite zu platzieren kommt. Bevorzugt ist in die Stirnfläche daher eine Nut eingelassen, die das Markierungsmittel aufnehmen und zur Fixierung beitragen kann und diesen Fehler korrigiert. Dies kann sowohl bei der magnetischen als auch bei der mechanischen Fixierung von Vorteil sein. Insbesondere bevorzugt ist die Nut derart in die Stirnseite eingelassen, dass das fixierte Markierungsmittel bis auf Höhe eines "wirksamen" Markierungspunktes in der Stirnseite gehalten ist. Dieser ist insbesondere die Spitze eines Nagels/Bolzens oder die Stiftspitze. Hierdurch erhöht sich insbesondere die Genauigkeit der Messung, da auf die räumliche Ausdehnung des Markierungsmittels Rücksicht genommen wird.Eine Nut im Sinne dieser Erfindung ist dabei jegliche Art von Vertiefung, die zur Aufnahme eines Markierungsmittels dienen kann - unabhängig von ihrer letztendlichen Form.

Um nun die durch verschieden dicke Markierungsmittel hervorgerufenen Fehler weiter minimieren zu können, sind bevorzugt mehrere Nuten, insbesondere bevorzugt mit unterschiedlichen Tiefen in die Stirnseite eingelassen. Hierdurch ist das Messmittel universell an die Verwendung unterschiedlichster Markierungsmittel mit verschiedenen Dicken angepasst.

Natürlich können an der Stirnseite mehrer Halterungen angebracht sein. Dies gilt sowohl für rein magnetische Ausgestaltungsformen als auch für Ausgestaltungsformen mit rein mechanischer Fixierung. Es sind aber auch Mischformen - kombiniert magnetisch und mechanisch - möglich. Zudem kann die vorteilhafte Ausgestaltung der die Markierungsmittel aufnehmenden Nut mit allen Möglichkeiten kombiniert werden.

Um die Einsatzmöglichkeiten des Messmittels weiter zu erhöhen, kann derjenige Bereich des Messmittels, der die Stirnseite und die daran angebrachte(n) Halterung(en) umfasst, austauschbar ausgestaltet ist. Dies wird bevorzugt dadurch bewerkstelligt, dass dieser Bereich des Messmittels auf eine Basis des Messmittels aufsteckbar ist, beispielsweise in Form einer in eine die Basis bildende Hülle/Schiene einsteckbaren Endkappe. Anschlagkanten bewerkstelligen Vorteilhafterweise, dass die verschiedenen Endkappen immer in der selben Art und Weise an der Basis anliegen; hierdurch wird ein Verschieben (drift) des Messpunktes, d.h. der Stirnseite gegenüber der Messskala unterbunden. Eine Fixierung dieses Bereiches (Schuh, Kappe, usw.) kann reib-, form- oder kraftschlüssig bewerkstelligt werden; möglich sind aber auch Klammern oder ähnlich lösbare Befestigungspunkte.

Die Erfindung wird im Folgenden anhand der beigefügten Figuren näher erläutert. Es zeigen:
- Fig. 1: eine schematische Ansicht eines Endabschnittes eines erfindungsgemäßen Messmittels;
- Fig. 2a-2c: perspektivische Ansichten von verschiedenen Bereichen mit Halterungen, wie sie in einem Endabschnitt eines Messmittels nach Figur 1 austauschbar angebracht werden können.

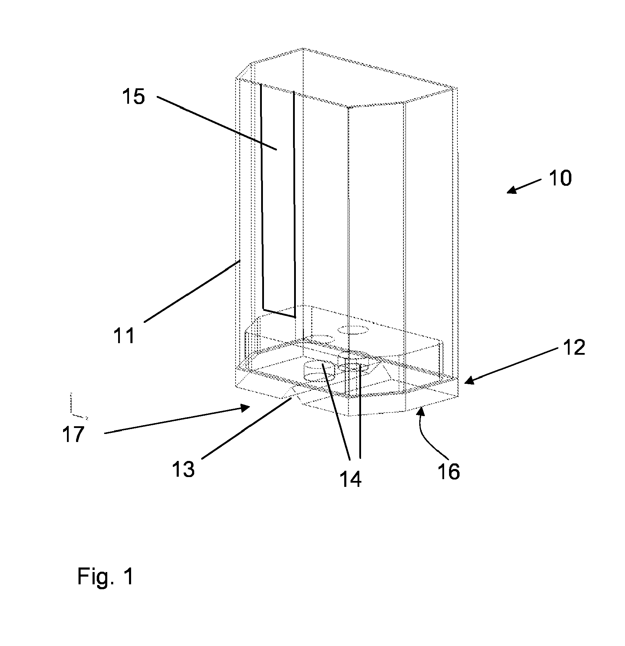

Die in Figur 1 dargestellte Ansicht zeigt einen Endbereich einer Messlatte 10 mit einem Basiskörper 11 und einer in diesem angebrachten Endkappe 12, welche mittels Reibschluss im Basiskörper 11 gehalten wird und somit leicht herauszuziehen und tauschbar ist. Beide Komponenten bilden dabei eine Einheit.

Am Basiskörper 11 befindet sich in der hier darstellten Form der Messlatte 10 eine Skala 15 zum Ablesen der Entfernung (Wert) der jeweiligen Position von der Stirnseite 16 der Messlatte 10. Hiermit kann dann eine Übertragung dieses Wertes oder einer Höhe auf die der Stirnseite 16 entsprechende Position vorgenommen werden. Natürlich besitzt die hier dargestellte Messlatte in Richtung der z-Achse eine weitaus größere Ausdehnung; die Figur beschränkt sich aber aus Gründen der besseren Darstellbarkeit auf den Endbereich der Messlatte. Zudem kann die gesamte Messlatte aus mehreren Gliedern besteht und teleskopartig ineinander verschiebbar aufgebaut sind. Zudem kann die Messlatte 10 einen entlang der Skala 15 verschiebbaren Laserempfänger aufweisen; hiermit wird die Detektion und Zuordnung des Laserstrahls in heller Umgebung zu einem Wert der Skala erleichtert.

Die Endkappe 12 wird durch die Stirnseite 16 abgeschlossen. An dieser befindet sich erfindungsgemäß die der temporären Fixierung eines Markierungsmittels dienende Halterung 17. Im vorliegenden Fall ist die Halterung 17 für ein (hier nicht dargestelltes) magnetisierbares Markierungsmittel, beispielsweise ein Nagel oder Bolzen, vorbereitet. Dieser wird in die hierfür vorgesehenen Nut 13 eingelegt und aufgrund der magnetischen Wechselwirkung mit den über der Nut angebrachten Magneten 14 in dieser Position gehalten. Derart fixiert kann die Messlatte 10 zusammen mit dem Nagel bzw. Bolzen auf einem entsprechenden Niveau platziert werden, ohne, dass hierfür die Hand von der Messlatte 10 entfernt werden müsste. Zum Setzen des Nagels, d.h. zur Markierung der Höhe genügt ein kurzer Schlag auf den Nagel. Sollte der Nagel nicht in das Objekt eindringen, hinterlässt die Spitze doch zumindest eine Markierung, die leicht wieder aufgefunden werden kann. Die Nut 13 weist Form und Tiefe dergestalt auf, dass der Nagel bzw. Bolzen so zu liegen kommt, dass dessen Spitze in der Ebene der Stirnseite 16 zu liegen kommt. Hierdurch ist gewährleistet, dass die durch den Nagel hervorgerufene Markierung ohne Fehler auf das Objekt, d.h. Wand bzw. Boden übertragen wird.

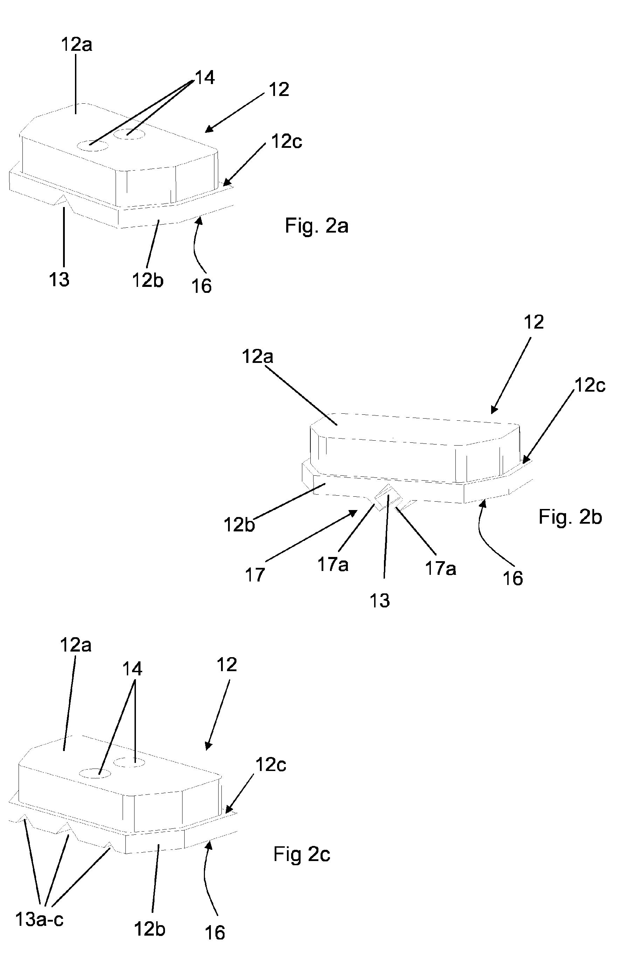

Die in Figur 1 eingesetzte Endkappe 12 ist in Figur 2a noch einmal ohne Basis 11 der Messlatte 10 dargestellt. Hierdurch sind die einzelnen Bereiche klarer sichtbar. Der Deckel 12b beinhaltet die Nut 13 und ist etwas breiter ausgestaltet als der die Magnete beinhaltende Kern 12a, so dass ein umlaufender Anschlag 12c entsteht. Beim Wechsel der Endkappen 12 wird der Kern 12a in den Basiskörper 11 geschoben; durch Reibschluss entsteht eine ausreichende Verbindung zwischen beiden Komponenten. Der Anschlag 12c gewährleistet dabei, dass die Endkappe 12 mit der Stirnseite 16 bezüglich der Skala 15 immer im Nullpunkt zu liegen kommt.

Figur 2b zeigt eine Endkappe 12 für ein nicht magnetisierbares Markierungsmittel, beispielsweise einen Stift oder eine Markierungskreide. Hierbei sind die zu Figur 2a identischen Komponenten mit denselben Bezugszeichen gekennzeichnet. Die Halterung 17 weist hierbei eine Nut 13 auf, die den Stift bzw. die Kreide derart aufnimmt, dass dessen/deren Spitze analog zu dem in Figur 2a gezeigten Beispiel in der Ebene der Stirnseite 16 zum Liegen kommt. Zudem sind an beiden Seiten der Nut Laschen 17a materialschlüssig angebracht, die den Stift/die Kreide in die Nut pressen und somit fixieren. Die Laschen 17a sind am Übergang zum Deckel 12b derart als Festkörpergelenk ausgestaltet, dass sie bei Abwesenheit des Markierungsmittels in die Nut schwenken, sobald die Messlatte 12 mit der Endkappe 12 auf die Stirnseite gestellt wird. Hierdurch wird die Benutzung der Messlatte nach konventionellem Verfahren durch die Laschen nicht beeinflusst. Natürlich ist es aber auch möglich, eine derartige Halterung für einen Nagel oder Bolzen (magnetisierbar) zu verwenden.

In Figur 2c ist eine Endkappe 12 mit mehreren Nuten 13a-c mit unterschiedlicher Form und Tiefe dargestellt. Hierdurch ist es möglich, mit ein und derselben Endkappe Markierungsmittel mit unterschiedlichem Durchmesser zu verwenden und dabei sicher zustellen, dass deren Spitzen bzw. Mittelpunkte in der Ebene der Stirnseite zu liegen kommen. Dies gewährleistet große Variabilität bei größtmöglicher Genauigkeit. Analog zu Figur 2a sind auch in Figur 2c zwei Magnete 14 angebracht, die die magnetisierbaren Markierungsmittel in den Nuten 13a-c fixieren. Im vorliegenden Fall sind die Magnete 14 über der mittleren Nut 13b angebracht, aufgrund deren Stärke reicht die Wechselwirkung jedoch aus, auch Markierungsmittel in den äußeren Nuten 13a, 13c zu fixieren. Selbstverständlich ist es auch möglich, jeder Nut 13a-c jeweils einen oder mehrere Magnete 14 zuzuordnen.

Unabhängig von den eben dargestellten Ausführungsformen ist es zudem natürlich auch möglich, Halterungen unterschiedlicher Art - für magnetisierbare und nicht magnetisierbare Markierungsmittel - in das Messmittel bzw. in die einzelnen Endkappen zu integrieren. Dies kann auch mit einer Anpassung an verschieden dicke Markierungsmittel einhergehen. Außerdem können natürlich auch Halterungen realisiert sein, die sowohl für magnetisierbare als auch nicht magnetisierbare Markierungsmittel verwendbar sind.

Letztendlich gilt das eben für eine Messlatte 10 Dargelegte natürlich entsprechend, wenn es sich bei dem hier dargestellten Werkzeug um einen Laserempfänger handelt, bei dem an Stelle der Skala 15 ein Detektionsbereich zur Bestimmung der Lage des Laserstrahls vorgesehen ist.

## Patentansprüche

1. Messmittel (10) zur Bestimmung und/oder Übertragung eindimensionaler Abmessungen, wobei sich die Abmessungen relativ auf mindestens eine Stirnseite (16) des Messmittels (10) beziehen, **dadurch gekennzeichnet, dass** an der mindestens einen Stirnseite (16) mindestens eine Halterung (17) für eine temporäre Fixierung eines Markierungsmittels angebracht ist.

2. Messmittel (10) nach Anspruch 1, **dadurch gekennzeichnet, dass** das Messmittel einen Laserempfänger umfasst.

3. Messmittel (10) nach Anspruch 1, **dadurch gekennzeichnet, dass** das Messmittel eine Messlatte oder eine Messlatte samt Laserempfänger umfasst.

4. Messmittel (10) nach einem oder mehreren der vorangegangen Ansprüche, **dadurch gekennzeichnet, dass** das Markierungsmittel zumindest teilweise magnetisierbar ausgestaltet ist.

5. Messmittel (10) nach Anspruch 4, **dadurch gekennzeichnet, dass** das Markierungsmittel einen Nagel oder ein Bolzen umfasst.

6. Messmittel (10) nach Anspruch 4 oder 5, **dadurch gekennzeichnet, dass** die Halterung (17) mindestens einen Magneten (14) umfasst.

7. Messmittel (10) nach einem oder mehreren der vorangegangenen Ansprüche, **dadurch gekennzeichnet, dass** die Halterung (17) das Markierungsmittel mechanisch fixiert.

8. Messmittel (10) nach einem oder mehreren der vorangegangenen Ansprüche, **dadurch gekennzeichnet, dass** die Halterung (17) einen Vorratsbehälter für Markierungsmittel umfasst.

9. Messmittel (10) nach Anspruch 7 oder 8, **dadurch gekennzeichnet, dass** die Halterung (17) zur Fixierung des Markierungsmittels dienende Laschen (17a) umfasst.

10. Messmittel (10) nach Anspruch 9, **dadurch gekennzeichnet, dass** die Laschen (17a) derart angebracht sind, dass die Laschen bei Abwesenheit des Markierungsmittels in die Stirnseite (16) schwenkbar oder klappbar sind.

11. Messmittel (10) nach einem oder mehreren der vorangegangenen Ansprüche, **dadurch gekennzeichnet, dass** eine Nut (13) derart in die Stirnseite (16) eingelassen ist, dass das fixierte Markierungsmittel zumindest teilweise, insbesondere bis auf Höhe eines Markierungspunktes, in der Stirnseite (16) gehalten ist.

12. Messmittel (10) nach Anspruch 11, **dadurch gekennzeichnet, dass** mehrere Nuten (13a-13c), insbesondere mit unterschiedlichen Tiefen in die Stirnseite (16) eingelassen sind.

13. Messmittel (10) nach einem oder mehreren der vorangegangenen Ansprüche , **dadurch gekennzeichnet, dass** ein Bereich (12) des Messmittels (10) mit der Stirnseite (16) und daran angebrachter Halterung (13) austauschbar ausgestaltet ist.
